# EUROPÄISCHE PATENTSCHRIFT

(11) **EP 3 374 212 B1**
(45) Veröffentlichungstag und Bekanntmachung des Hinweises auf die Patenterteilung: **30.10.2019**
(21) Anmeldenummer: 16791637.8
(22) Anmeldetag: 09.11.2016
(51) Int. Cl.: B60G 17/027, B60G 15/06

(54) **KRAFTFAHRZEUG-FAHRGESTELL**
MOTOR VEHICLE CHASSIS
CHÂSSIS DE VÉHICULE AUTOMOBILE

(30) Priorität: 13.11.2015 DE 102015119637
(43) Veröffentlichungstag der Anmeldung: 19.09.2018
(73) Patentinhaber: Hoerbiger Automotive Komfortsysteme GmbH, 86956 Schongau (DE)
(72) Erfinder: STOLLE, Klaus, 86972 Schwabniederhofen (DE); HUBER, Gerhard, 87662 Frankenhofen (DE); SCHLEICH, Gisela, 86986 Schwabbruck (DE); OSTERRIED, Jürgen, 87459 Pfronten (DE); MÜLLER, Peter, 86179 Augsburg (DE)
(74) Vertreter: Grättinger Möhring von Poschinger Patentanwälte Partnerschaft mbB
(86) Internationale Anmeldenummer: PCT/EP2016/077146
(87) Internationale Veröffentlichungsnummer: WO 2017/081083

(56) Entgegenhaltungen:
- EP-A1- 0 857 871
- EP-A2- 1 236 591
- WO-A1-2011/124513
- WO-A2-2016/180590
- DE-A1- 19 855 310
- DE-A1-102005 010 098
- GB-A- 2 338 689
- US-A1- 2014 306 409

## Beschreibung

Die vorliegende Erfindung betrifft ein Kraftfahrzeug-Fahrgestell, umfassend eine Basisstruktur und mehrere mit dieser über jeweils eine Radaufhängung verbundene Räder. Namentlich betrifft die vorliegende Erfindung ein Kraftfahrzeug-Fahrgestell der im Oberbegriff des Anspruchs 1 angegebenen Art.

Bei Kraftfahrzeug-Fahrgestellen umfassen die Radaufhängungen, über welche die Räder mit der Basisstruktur verbunden sind, üblicherweise eine Feder sowie einen Stoßdämpfer. Bekannt sind dabei unterschiedliche Möglichkeiten, was die Ausführung der Feder (Schraubenfedern, Blattfedern, Torsionsfedern) sowie deren räumliche Anordnung zu den übrigen Komponenten der Radaufhängung, namentlich relativ zu dem zugeordneten Stoßdämpfer angeht. Eine insbesondere bei lenkbaren (Vorder-)Rädern verbreitet eingesetzte Variante bilden sog. McPherson-Federbeine, bei denen ein Stoßdämpfer innerhalb einer als Schraubenfeder ausgeführten Feder angeordnet ist. Insbesondere bei nicht-lenkbaren (Hinter-)Rädern sind demgegenüber im erheblichen Umfang Radaufhängungen anzutreffen, bei denen ein Stoßdämpfer außerhalb einer als Schraubenfeder ausgeführten Feder angeordnet ist.

Es ist weiterhin bekannt, Kraftfahrzeuge mit einer Höhen-Verstelleinrichtung auszustatten, um bei Bedarf (z. B. beim Befahren von Rampen oder dergl.) die Bodenfreiheit erhöhen bzw. die Basisstruktur (z. B. zur Kraftstoffeinsparung bei Autobahnfahrt) absenken zu können. Typischerweise, wenngleich nicht zwingend, greift dabei die betreffende Höhen-Verstelleinrichtung in einen der Fußpunkte der Feder der betreffenden Radaufhängung ein und verändert diesen, wobei prinzipiell nicht entscheidend ist, ob der der Basisstruktur oder aber der dem betreffenden Rad zugeordnete Federfußpunkt verstellt wird. Neben pneumatischen und elektrischen Federfußpunkt-Verstellantrieben (vgl. z.B. DE 102007051971 B4 und DE 102007051299 A1) sind insbesondere auch hydraulische Federfußpunkt-Verstellantriebe bekannt, beispielsweise aus der DE 3223195 A1, der DE 102009047100 A1, der US 5181696 A, der EP 2301773 A1, der JP 2010-149550 A, der WO 2014/142160 A1 sowie der DE 19744757 A1, die wie auch andere der angegebenen Schriften, ein gattungsgemäßes Kraftfahrzeug-Fahrgestell der im Oberbegriff des Anspruchs 1 angegebenen Art offenbart. Eine der jeweiligen Radaufhängung zugeordnete hydraulische Zylinder-Kolben-Anordnung wird dabei gesteuert von einem Hydraulikaggregat beaufschlagt. Dabei kann für mehrere Radaufhängungen ein gemeinsames, zentrales Hydraulikaggregat vorgesehen sein, wie dies beispielsweise für das der DE 19744757 A1 entnehmbare Kraftfahrzeug-Fahrgestell gilt; oder aber es können mehrere dezentrale, der jeweiligen Radaufhängung zugeordnete Hydraulikaggregate vorgesehen sein, welche jeweils nur eine einzige hydraulische Zylinder-Kolben-Anordnung beaufschlagen. Das Dokument DE 10 2005 010 098 A1 offenbart ein Kraftfahrzeug-Fahrgestell gemäß dem Oberbegriff des Anspruchs 1.

Im Lichte des vorstehend aufgezeigten Standes der Technik ist die vorliegende Erfindung darauf gerichtet, ein Kraftfahrzeug-Fahrgestell der eingangs angegebenen Art bereitzustellen, das sich bei der Möglichkeit, die Höhe der Basisstruktur oberhalb der Fahrbahn aktiv zu verändern, durch eine bisher nicht bekannte Praxistauglichkeit auszeichnet. Namentlich soll ein Kraftfahrzeug-Fahrgestell mit einer besonders kompakten und gleichwohl zuverlässig arbeitenden Höhen-Verstelleinrichtung bereitgestellt werden.

Gelöst wird die vorstehend dargelegte Aufgabenstellung gemäß der vorliegenden Erfindung durch das in Anspruch 1 angegebene Kraftfahrzeug-Fahrgestell. Demnach zeichnet sich das erfindungsgemäße, eine Basisstruktur und mehrere mit dieser über jeweils eine Radaufhängung verbundene Räder umfassende Kraftfahrzeug-Fahrgestell durch die folgenden, in synergetischer Weise funktional zusammenwirkenden Merkmale aus:
- Mindestens eine erste Radaufhängung weist eine dem betreffenden Rad zugeordnete, als Schraubenfeder ausgeführte Feder und einen dem betreffenden Rad zugeordneten, außerhalb der Feder angeordneten Stoßdämpfer auf;
- der ersten Radaufhängung ist eine hydraulische Höhen-Verstelleinrichtung mit einer auf einen Fußpunkt der Schraubenfeder einwirkenden Zylinder-Kolben-Anordnung zugeordnet;
- die Zylinder-Kolben-Anordnung ist von einem dem betreffenden Rad zugeordneten dezentralen, einen Vorratsbehälter für Hydraulikflüssigkeit und eine durch einen Elektromotor angetriebene Hydraulikpumpe umfassenden Hydraulikaggregat beaufschlagbar;
- zumindest der Elektromotor des Hydraulikaggregats ist innerhalb der Schraubenfeder angeordnet.

Dadurch, dass zumindest der Elektromotor des (dezentralen, allein die Zylinder-Kolben-Anordnung der Höhen-Verstelleinrichtung des betreffenden Rades beaufschlagenden) Hydraulikaggregats (zumindest teilweise) in dem von der Schraubenfeder umschriebenen Raum untergebracht und der dem betreffenden Rad zugeordnete Stoßdämpfer außerhalb der Schraubenfeder angeordnet ist, lassen sich eine Höhenverstellung des Kraftfahrzeug-Fahrgestells erlaubende und trotzdem außerordentlich kompakte Radaufhängungen realisieren. Zudem schützt die Schraubenfeder den Elektromotor vor einer Beschädigung durch größere Fremdkörper wie Steine oder dergleichen. Infolgedessen kann der Elektromotor des Hydraulikaggregats, was die Dimensionierung seiner Bauteile angeht, auf geringere mechanische Belastungen ausgelegt sein als im Falle eines freiliegenden Elektromotors. Bei geschickter Gestaltung der übrigen Komponenten kann im Übrigen die erfindungsgemäße Anordnung des Elektromotors des Hydraulikaggregats dazu beitragen, dass auf längere und/oder freiliegende Hydraulikleitungen zwischen der - besonders bevorzugt ebenfalls innerhalb der Schraubenfeder untergebrachten - Hydraulikpumpe des Hydraulikaggregats und der Zylinder-Kolben-Anordnung der Höhen-Verstelleinrichtung verzichtet werden kann. Die Abwesenheit freiliegender Hydraulikleitungen wirkt sich positiv auf die Zuverlässigkeit des Systems aus. Und von der Möglichkeit besonders kurzer Hydraulikleitungen profitieren (aufgrund hoher Steifigkeit und Ansprechgeschwindigkeiten) die Betriebseigenschaften des Systems.

Nach der Erfindung umfasst die hydraulische Zylinder-Kolben-Anordnung einen ringförmigen hydraulischen Arbeitsraum. Dieser umgibt den Elektromotor des Hydraulikaggregats und/oder dessen Hydraulikpumpe. Und besonders bevorzugt ist somit auch der ringförmige hydraulische Arbeitsraum der Zylinder-Kolben-Anordnung (zumindest teilweise) innerhalb der Schraubenfeder angeordnet. Letztere kann auf diese Weise auch die Zylinder-Kolben-Anordnung vor einer mechanischen Beschädigung schützen, was wiederum im Hinblick auf die Zuverlässigkeit des Systems einen unschätzbaren Vorteil darstellt.

Gemäß der Erfindung ist ein (ebenfalls) ringförmig ausgeführter Hydraulikflüssigkeits-Vorratsbehälter vorgesehen, welcher besonders bevorzugt (auch) innerhalb der Schraubenfeder angeordnet ist. Nach der Erfindung weist jener ringförmige Hydraulikflüssigkeits-Vorratsbehälter dabei ein gegensinnig zum Volumen des hydraulischen Arbeitsraumes der Zylinder-Kolben-Anordnung veränderbares Volumen auf. Letzteres trägt dazu bei, dass der Hydraulikflüssigkeits-Vorratsbehälter nur besonders wenig Bauraum beansprucht. Minimal kann jener Bauraum dann sein, wenn die Querschnittsflächen des ringförmigen Arbeitsraumes und des ringförmigen Hydraulikflüssigkeits-Vorratsbehälters identisch sind; denn in diesem Falle bedarf es keinerlei Ausgleichsvolumens, weil sich bei einer Betätigung der Höhen-Verstelleinrichtung das Volumen des Hydraulikflüssigkeits-Vorratsbehälters exakt um das Gleiche Maß reduziert wie das des hydraulischen Arbeitsraumes zunimmt bzw. umgekehrt. Der Wegfall eines Ausgleichsvolumens gestattet die Realisierung eines ganz besonders kompakten Systems.

Eine wiederum andere bevorzugte Weiterbildung der vorliegenden Erfindung zeichnet sich dadurch aus, dass die hydraulische Höhen-Verstelleinrichtung eine komplexe, das Hydraulikaggregat und die zugeordnete Zylinder-Kolben-Anordnung umfassende elektro-hydraulische Verstell-Baugruppe umfasst, von der, wie eingangs dargelegt, jedenfalls der Elektromotor des Hydraulikaggregats zumindest teilweise in die Schraubenfeder hineinragt. Jene komplexe elektro-hydraulische Verstell-Baugruppe umfasst in ganz besonders bevorzugter Weiterbildung einen Adapter, in welchen die Zylinder-Kolben-Anordnung dergestalt integriert ist, dass zwischen der Hydraulikpumpe und der Zylinder-Kolben-Anordnung keinerlei freiliegende Hydraulikleitungen existieren. Der Adapter bildet dabei die mechanische Schnittstelle zur zugeordneten Schraubenfeder; diese stützt sich somit an einer Federauflage ab, welche einen Teil der elektro-hydraulischen Verstell-Baugruppe darstellt.

Gemäß dem hohen Grad an Komplexität ist weiterhin besonders bevorzugt in den Adapter das Pumpengehäuse der zugeordneten Hydraulikpumpe dergestalt integriert, dass der Pumpenrotor in einem in dem Adapter ausgeführten Hohlraum rotiert. Auch dies ist eine Möglichkeit, den erforderlichen Bauraum besonders klein zu halten, was bei bestimmten Konstellationen überhaupt erst die erfindungsgemäße teilweise Unterbringung des Hydraulikaggregats in dem von der Schraubenfeder umschlossenen Raum ermöglicht.

In bevorzugter Weiterbildung umfasst der Adapter einen Grundköper und einen auf diesem verschiebbar geführten, die weiter oben bereits angesprochene Federauflage aufweisenden Betätigungsabschnitt. Bevorzugt ist dabei der (ringförmige) hydraulische Arbeitsraum - und ggf. auch der (ringförmige) Hydraulikflüssigkeits-Vorratsbehälter - zwischen einem Gehäuseabschnitt des Grundkörpers und dem Betätigungsabschnitt des Adapters in diesen integriert ausgeführt. Der Gehäuseabschnitt, welcher besonders bevorzugt mit der Basisstruktur der Kraftfahrzeug-Karosserie verbunden ist, kann dabei ganz besonders bevorzugt einen Adapterkern umschließen, an dessen äußerer Umfangsfläche, d. h. in der Trennfläche zwischen dem Adapterkern und einem diesen umgebenden Mantelbereich des Gehäuseabschnitts hydraulische Fluidkanäle ausgeführt sind. Eine solche Anordnung von (zuströmseitigen und/oder abströmseitigen) Fluidkanälen erlaubt eine Ausführung der Pumpeneinheit mit geringstmöglichen Abmessungen, was der Anordnung auch der Hydraulikpumpe des Hydraulikaggregats in dem von der Schraubenfeder umschlossenen Raum entgegenkommt.

Der Adapterkern ist bevorzugt zylindrisch ausgeführt und dichtend in einem korrespondierenden zylindrischen Hohlraum des Gehäuseabschnitts des Adapter-Grundkörpers fixiert. Insbesondere können der Adapterkern und der Gehäuseabschnitt mittels eines Schrumpfverfahrens dauerhaft fest und dicht miteinander verbunden sein. Durch die Integration von Fluidkanälen in die Trennfläche von Adapterkern und Gehäuseabschnitt, indem auf der Umfangsfläche des Adapterkerns Nuten existieren, welche durch die korrespondierende Innenfläche des Hohlraumes des Gehäuseabschnitts abgedeckt sind, lassen sich selbst schaltungstechnisch komplexe Hydraulikschaltungen auf minimalem Bauraum unterbringen. Dies ermöglicht besonders kompakte Strukturen. Dies wiederum ist ein zentraler Aspekt für die - gemäß einer bevorzugten Weiterbildung der Erfindung vorgesehene - Unterbringung entscheidender Teile der Höhenverstelleinrichtung innerhalb der als Schraubenfeder ausgeführten Feder der jeweiligen Radabstützung.

Gemäß einer wiederum anderen bevorzugten Weiterbildung der Erfindung ist das Hydraulikaggregat bevorzugt zumindest teilweise von einem Schutzrohr umgeben. Der hierdurch verbesserte Schutz des Hydraulikaggregats vor Beschädigung wirkt sich im Sinne einer gesteigerten Betriebssicherheit aus. Das Schutzrohr kann dabei insbesondere relativ zum Hydraulikaggregat bewegbar sein, beispielsweise indem es eine Verlängerung des (weiter oben erwähnten) Betätigungsabschnitts darstellt.

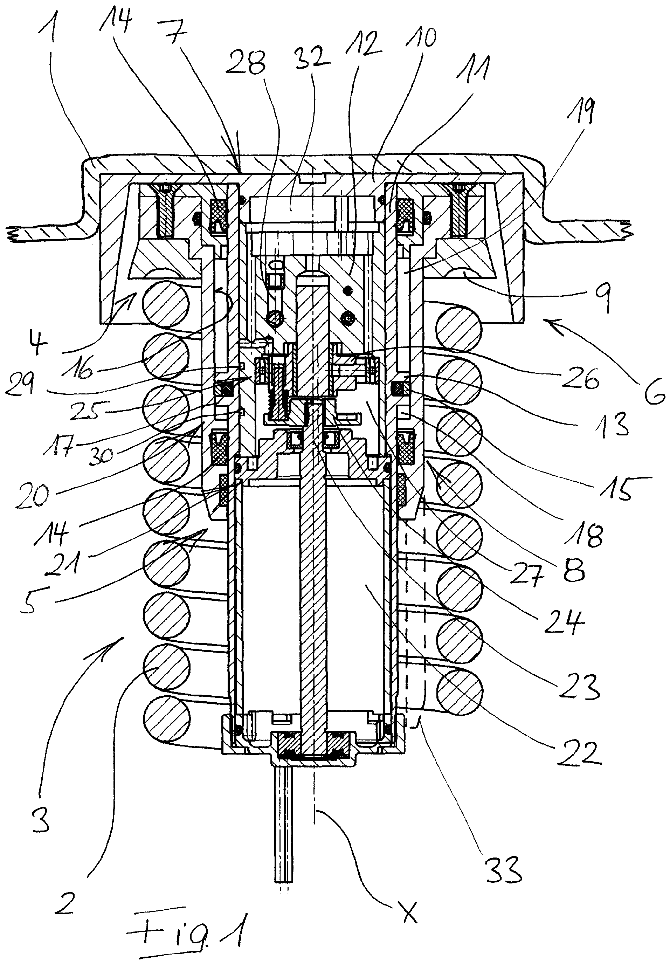

Im Folgenden wird die vorliegende Erfindung anhand eines in der Zeichnung veranschaulichten bevorzugten Ausführungsbeispiels näher erläutert. Die Zeichnung zeigt dabei, nachdem es für das Verständnis der vorliegenden Erfindung nur hierauf, nicht indessen auf die - hinreichend bekannten - sonstigen Ausführungsmerkmale des betreffenden Kraftfahrzeug-Fahrgestells ankommt, nur - jeweils in einem Vertikalschnitt - die Höhen-Verstelleinrichtung einer Radaufhängung, und zwar
- Fig. 1: in einer ersten Konfiguration, welche der maximal abgesenkten Lage des Fahrgestells entspricht, und

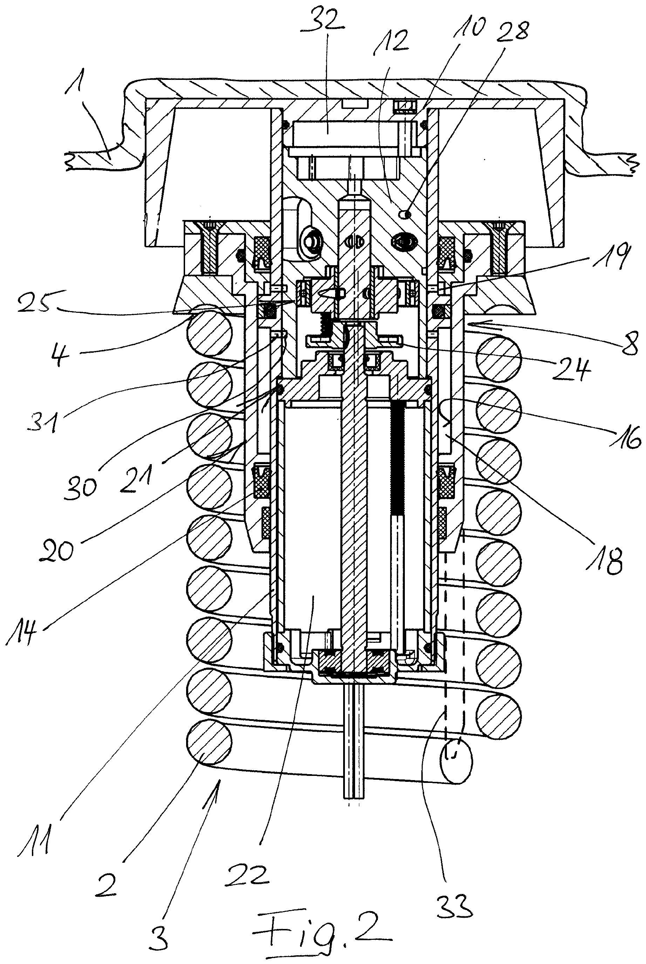

- Fig. 2: in einer zweiten, der maximal angehobenen Lage des Fahrgestells entsprechenden Konfiguration.

Die in der Zeichnung veranschaulichte Höhen-Verstelleinrichtung ist Teil eines als solches dem allgemein bekannten Stand der Technik entsprechenden (und daher nicht gezeigten) Kraftfahrzeug-Fahrgestells, welches eine Basisstruktur 1 und mehrere mit dieser über jeweils eine Radaufhängung verbundene Räder umfasst. Zumindest jene Radaufhängung, der die in der Zeichnung gezeigte Radaufhängung zugeordnet ist, weist eine als Schraubenfeder 2 ausgeführte Feder 3 und einen außerhalb der Feder 3 angeordneten (nicht gezeigten) Stoßdämpfer auf.

Die gezeigte hydraulische Höhen-Verstelleinrichtung wirkt dergestalt auf den oberen Fußpunkt 4 der Schraubenfeder 2 ein, dass der Abstand des oberen Fußpunktes 4 der Schraubenfeder 2 zur Basisstruktur 1 des Kraftfahrzeug-Fahrgestells veränderbar ist. Hierzu ist die hydraulische Höhen-Verstelleinrichtung als eine komplexe Verstell-Baugruppe 5 ausgeführt. Diese umfasst einen Adapter 6, welcher seinerseits namentlich einen Grundkörper 7 und einen auf diesem verschiebbar geführten Betätigungsabschnitt 8 umfasst. Während der Grundkörper 7 des Adapters 6 mit der Basisstruktur 1 des Fahrgestells verbunden ist, weist der Betätigungsabschnitt 8 eine Federauflage 9 auf, an welcher sich die Schraubenfeder 2 im Bereich ihres oberen Fußpunktes 4 abstützt.

Der Grundkörper 7 des Adapters 6 umfasst als Hauptkomponenten einen der Verbindung mit der Basisstruktur 1 dienenden Stützteller 10, einen Gehäuseabschnitt 11 und einen darin aufgenommenen Adapterkern 12. Der Gehäuseabschnitt 11 weist eine durch einen Bund 13 in einen oberen Bereich und einen unteren Bereich unterteilte zylindrische Oberfläche auf. Auf dieser ist der (dreiteilige) Betätigungsabschnitt 8 längs der Achse X verschiebbar geführt, und zwar mittels der Dichtungen 14 oben und unten abgedichtet. Der auf dem Gehäuseabschnitt 11 ausgeführte Bund 13 ist mittels der in eine umlaufende Nut eingelegten Ringdichtung 15 gegenüber der zylindrischen Innenfläche 16 des Betätigungsabschnitts 8 abgedichtet. Er stellt einen Ringkolben 17 dar, welcher gemeinsam mit der inneren Oberfläche 16 des Betätigungsabschnitts 8 und der äußeren Oberfläche des Gehäuseabschnitts 11 in dessen unteren und dessen oberen Bereich einerseits einen ringförmigen hydraulischen Arbeitsraum 18 und andererseits einen ringförmigen Hydraulikflüssigkeits-Vorratsbehälter 19 definiert. In diesem Sinne bilden die miteinander zusammenwirkenden Bereiche des Gehäuseabschnitts 11 des Adapters 6 einerseits und des Betätigungsabschnitts 8 andererseits eine hydraulische Zylinder-Kolben-Anordnung 20 aus.

Der Beaufschlagung der hydraulischen Zylinder-Kolben-Anordnung 20 der hydraulischen Höhen-Verstelleinrichtung dient das Hydraulikaggregat 21. Dieses umfasst den innerhalb des Gehäuseabschnitts 11 angeordneten Elektromotor 22 und die von diesem über die - mit der Motorwelle 23 verbundene - Kupplung 24 angetriebene, als Radialkolbenpumpe ausgeführte Hydraulikpumpe 25. Das Pumpengehäuse der Hydraulikpumpe 25 ist in den Adapter 6 integriert, indem der Rotor 26 der Hydraulikpumpe in einem in dem Adapterkern 12 ausgeführten Aufnahmehohlraum untergebracht 27 ist. Der Anschluss der Hydraulikpumpe 25 an das hydraulische System erfolgt über in dem Adapterkern 12 ausgeführte Hydraulikleitungen bzw. - bohrungen 28 sowie auf der Oberfläche des Adapterkerns 12 ausgeführte Nuten 29, welche gemeinsam mit der Innenfläche des den Adapterkern 12 umgebenden Gehäuseabschnitts 11 hydraulische Strömungskanäle 30 definieren. An diese Strömungskanäle 30 sind über den Gehäuseabschnitt 11 durchsetzende Bohrungen 31 einerseits der ringförmige hydraulische Arbeitsraum 18 und andererseits der ringförmige Hydraulikflüssigkeits-Vorratsbehälter 19 angeschlossen.

Indem der Hydraulikflüssigkeits-Vorratsbehälter 19 ein gegensinnig zum Volumen des hydraulischen Arbeitsraumes 18 der Zylinder-Kolben-Anordnung 20 veränderbares Volumen aufweist, wobei - infolge der beiderseits identischen Stirnfläche des Ringkolbens 17 - die Summe der Volumina von Hydraulikflüssigkeits-Vorratsbehälter 19 und hydraulischem Arbeitsraum 18 konstant ist, wird zum Anheben des Fahrwerks Hydraulikflüssigkeit aus dem ringförmigen Hydraulikflüssigkeits-Vorratsbehälter 19 mittels der Hydraulikpumpe 25 direkt und unmittelbar in den hydraulischen Arbeitsraum 18 gefördert. Für das Absenken des Fahrwerks (allein aufgrund des Fahrzeuggewichts) wird ein Rückströmungsweg zwischen dem hydraulischen Arbeitsraum 18 und dem ringförmigen Hydraulikflüssigkeits-Vorratsbehälter 19 geöffnet. Eine hierzu geeignete hydraulische Schaltung ist beispielsweise Gegenstand des deutschen Patents 102014018788. Die erforderliche Ventiltechnik, beispielsweise das mindestens eine dem Halten des Fahrwerks auf der eingestellten Höhe dienende Rückschlagventil, ist in dem Adapterkern 12 untergebracht. Infolge der direkten Strömung von Hydraulikflüssigkeit aus dem ringförmigen Hydraulikflüssigkeits-Vorratsbehälter 19 in den ringförmigen hydraulischen Arbeitsraum 18 (und umgekehrt), ist ein Ausgleichsraum für Hydraulikflüssigkeit nicht erforderlich. Der durch den Adapterkern 12, den Gehäuseabschnitt 11 und den Stützteller 10 begrenzte Raum 32 stellt daher allein ein Hydraulikflüssigkeits-Reservoir dar, aus welchem heraus eine allfällige Leckage ersetzt wird.

Die besondere Anordnung der vorstehend angesprochenen Teile und Komponenten der hydraulischen Höhen-Verstelleinrichtung ist der Zeichnung unmittelbar entnehmbar. Namentlich ist ersichtlich, dass der Elektromotor 22 des Hydraulikaggregats 21 ebenso innerhalb der Schraubenfeder 2 angeordnet ist wie der ringförmige hydraulische Arbeitsraum 18, der im Übrigen - jedenfalls bei angehobenem Fahrwerk - den Elektromotor 22 des Hydraulikaggregats 21 umgibt. Der - ebenfalls innerhalb der Schraubenfeder 2 angeordnete - ringförmige Hydraulikflüssigkeits-Vorratsbehälter 19 umgibt demgegenüber die Hydraulikpumpe 25. Ebenfalls ist erkennbar, dass bei der gezeigten elektro-hydraulischen Verstell-Baugruppe die Zylinder-Kolben-Anordnung 20 dergestalt in den Adapter 6 integriert ist, dass zwischen der Hydraulikpumpe 25 und der Zylinder-Kolben-Anordnung 20 keinerlei freiliegende Hydraulikleitungen existieren.

Mit gestrichelten Linien ist schließlich (aus Gründen der Übersichtlichkeit nur einseitig) angedeutet, dass der Betätigungsabschnitt 8 nach unten rohrförmig verlängert werden kann, wodurch ein das Hydraulikaggregat 21 außen umgebendes Schutzrohr 33 entsteht.

## Patentansprüche

1. Kraftfahrzeug-Fahrgestell, umfassend eine Basisstruktur (1) und mehrere mit dieser über jeweils eine Radaufhängung verbundene Räder, wobei mindestens eine erste Radaufhängung eine dem betreffenden Rad zugeordnete, als Schraubenfeder (2) ausgeführte Feder (3) aufweist, wobei weiterhin der ersten Radaufhängung eine hydraulische Höhen-Verstelleinrichtung zugeordnet ist mit einer auf einen Fußpunkt (4) der Schraubenfeder (2) einwirkenden, einen hydraulischen Arbeitsraum (18) umfassenden Zylinder-Kolben-Anordnung (20), welche von einem einen Vorratsbehälter (19) für Hydraulikflüssigkeit und eine durch einen Elektromotor (22) angetriebene Hydraulikpumpe (25) umfassenden, dem betreffenden Rad zugeordneten dezentralen Hydraulikaggregat (21) beaufschlagbar ist, wobei zumindest der Elektromotor (22) des Hydraulikaggregats (21) innerhalb der Schraubenfeder (2) angeordnet ist,
**gekennzeichnet durch** die folgenden Merkmale:
die erste Radaufhängung weist einen dem betreffenden Rad zugeordneten, außerhalb der Feder angeordneten Stoßdämpfer auf;
der hydraulische Arbeitsraum (18) der hydraulischen Zylinder-Kolben-Anordnung (20) ist ringförmig und umgibt den Elektromotor (22) des Hydraulikaggregats (21) und/oder dessen Hydraulikpumpe (25);
der Hydraulikflüssigkeits-Vorratsbehälter (19) ist ringförmig ausgeführt, umgibt den Elektromotor (22) des Hydraulikaggregats (21) und/oder dessen Hydraulikpumpe (25) und weist ein gegensinnig zum Volumen des hydraulischen Arbeitsraumes (18) der Zylinder-Kolben-Anordnung (20) veränderbares Volumen auf.

2. Kraftfahrzeug-Fahrgestell nach Anspruch 1, **dadurch gekennzeichnet, dass** auch die Hydraulikpumpe (25) des Hydraulikaggregats (21) innerhalb der Schraubenfeder (2) angeordnet ist.

3. Kraftfahrzeug-Fahrgestell nach Anspruch 1 oder Anspruch 2, **dadurch gekennzeichnet, dass** auch der Hydraulikflüssigkeits-Vorratsbehälter (19) innerhalb der Schraubenfeder (2) angeordnet ist.

4. Kraftfahrzeug-Fahrgestell nach einem der Ansprüche 1 bis 3, **dadurch gekennzeichnet, dass** die hydraulische Höhen-Verstelleinrichtung eine komplexe, das Hydraulikaggregat (21) und die zugeordnete Zylinder-Kolben-Anordnung (20) umfassende elektro-hydraulische Verstell-Baugruppe (5) umfasst.

5. Kraftfahrzeug-Fahrgestell nach Anspruch 4, **dadurch gekennzeichnet, dass** die elektro-hydraulische Verstell-Baugruppe (5) einen Adapter (6) umfasst, in welchen die Zylinder-Kolben-Anordnung (20) dergestalt integriert ist, dass zwischen der Hydraulikpumpe (25) und der Zylinder-Kolben-Anordnung (20) keinerlei freiliegende Hydraulikleitungen existieren.

6. Kraftfahrzeug-Fahrgestell nach Anspruch 5, **dadurch gekennzeichnet, dass** in den Adapter (6) ein Pumpengehäuse der zugeordneten Hydraulikpumpe (25) dergestalt integriert ist, dass ein Pumpenrotor (26) in einem in dem Adapter (6) ausgeführten Hohlraum (27) rotiert.

7. Kraftfahrzeug-Fahrgestell nach Anspruch 5 oder Anspruch 6, **dadurch gekennzeichnet, dass** der Adapter (6) einen Grundkörper (7) und einen auf diesem verschiebbar geführten, eine Federauflage (9) aufweisenden Betätigungsabschnitt (8) umfasst.

8. Kraftfahrzeug-Fahrgestell nach Anspruch 7, **dadurch gekennzeichnet, dass** der Grundkörper (7) einen Gehäuseabschnitt (11) und einen darin aufgenommenen Adapterkern (12) umfasst.

9. Kraftfahrzeug-Fahrgestell nach Anspruch 8, **dadurch gekennzeichnet, dass** in der Trennfläche zwischen dem Adapterkern (12) und dem Gehäuseabschnitt (11) hydraulische Fluidkanäle (30) ausgeführt sind.

10. Kraftfahrzeug-Fahrgestell nach einem der Ansprüche 7 bis 9, **dadurch gekennzeichnet, dass** die Zylinder-Kolben-Anordnung (20) einen zwischen dem Grundkörper (7) und dem Betätigungsabschnitt (8) ausgeführten ringförmigen Arbeitsraum (18) umfasst.

11. Kraftfahrzeug-Fahrgestell nach einem der Ansprüche 5 bis 10, **dadurch gekennzeichnet, dass** der Hydraulikflüssigkeits-Vorratsbehälter (19) in den Adapter (6) integriert ist.

12. Kraftfahrzeug-Fahrgestell nach einem der Ansprüche 5 bis 11, **dadurch gekennzeichnet, dass** der Grundkörper (7) des Adapters (6) mit der Basisstruktur (1) des Kraftfahrzeug-Fahrgestells verbunden ist.

13. Kraftfahrzeug-Fahrgestell nach einem der Ansprüche 1 bis 12, **dadurch gekennzeichnet, dass** das Hydraulikaggregat (21) zumindest teilweise von einem Schutzrohr (33) umgeben ist.

14. Kraftfahrzeug-Fahrgestell nach Anspruch 13, **dadurch gekennzeichnet, dass** das Schutzrohr (33) relativ zum Hydraulikaggregat (21) bewegbar ist.

## Claims

1. A motor vehicle chassis comprising a base structure (1) and a plurality of wheels connected to said structure via respective wheel suspensions, wherein at least one first wheel suspension has a spring (3) which is designed as a coil spring (2) and which is associated with the respective wheel, wherein the first wheel suspension furthermore is associated with a hydraulic height adjustment device having a cylinder-piston arrangement (20) comprising a hydraulic working space (18) and acting upon a base point (4) of the coil spring (2), which cylinder-piston arrangement (20) can be supplied by a decentralized hydraulic aggregate (21) associated with the respective wheel and comprising a storage container (19) for hydraulic fluid and a hydraulic pump (25) driven by an electric motor (22), wherein at least the electric motor (22) of the hydraulic aggregate (21) is arranged within the coil spring (2),
**characterized by the following characteristics:**
the first wheel suspension has a shock absorber which is associated with the respective wheel and which is arranged outside of the coil;
the hydraulic working space (18) of the hydraulic cylinder-piston arrangement (20) is ring-shaped and surrounds the electric motor (22) of the hydraulic aggregate (21) and/or its hydraulic pump (25);
the hydraulic fluid storage container (19) is designed ring-shaped, surrounds the electric motor (22) of the hydraulic aggregate (21) and/or its hydraulic pump (25), and has a volume which can be modified inversely to the volume of the hydraulic working space (18) of the hydraulic cylinder-piston arrangement (20).

2. The motor vehicle chassis according to Claim 1, **characterized in that** the hydraulic pump (25) of the hydraulic aggregate (21) also is arranged within the coil spring (2).

3. The motor vehicle chassis according to Claim 1 or Claim 2, **characterized in that** the hydraulic fluid storage container (19) also is arranged within the coil spring (2).

4. The motor vehicle chassis according to any one of Claims 1 to 3, **characterized in that** the hydraulic height adjustment device comprises a complex electro-hydraulic adjustment assembly (5) comprising the hydraulic aggregate (21) and the associated cylinder-piston arrangement (20).

5. The motor vehicle chassis according to Claim 4, **characterized in that** the electro-hydraulic adjustment assembly (5) comprises an adapter (6), in which the cylinder-piston arrangement (20) is integrated in such a manner that no exposed hydraulic lines exist between the hydraulic pump (25) and the cylinder-piston arrangement (20).

6. The motor vehicle chassis according to Claim 5, **characterized in that** a pump housing of the associated hydraulic pump (25) is integrated into the adapter (6) in such a manner that a pump rotor (26) rotates inside a cavity (27) designed inside the adapter (6).

7. The motor vehicle chassis according to Claim 5 or Claim 6, **characterized in that** the adapter (6) comprises a base (7) and an actuating portion (8) which is displaceable along said base and which has a spring base (9).

8. The motor vehicle chassis according to Claim 7, **characterized in that** the base (7) comprises a housing portion (11) and an adapter core (12) housed therein.

9. The motor vehicle chassis according to Claim 8, **characterized in that** hydraulic fluid channels (30) are designed in the dividing wall between the adapter core (12) and the housing portion (11).

10. The motor vehicle chassis according to any one of Claims 7 to 9, **characterized in that** the cylinder-piston arrangement (20) comprises a ring-shaped working space (18) designed between the base (7) and the actuating portion (8).

11. The motor vehicle chassis according to any one of Claims 5 to 10, **characterized in that** the hydraulic fluid storage container (19) is integrated into the adapter (6).

12. The motor vehicle chassis according to any one of Claims 5 to 11, **characterized in that** the base (7) of the adapter (6) is connected to the base structure (1) of the motor vehicle chassis.

13. The motor vehicle chassis according to any one of Claims 1 to 12, **characterized in that** the hydraulic aggregate (21) is at least partially surrounded by a protective tube (33).

14. The motor vehicle chassis according to Claim 13, **characterized in that** the protective tube (33) is moveable relative to the hydraulic aggregate (21).

## Revendications

1. Châssis de véhicule automobile, comprenant une structure de base (1) et plusieurs roues reliées respectivement à celle-ci par le biais d'une suspension de roues, sachant qu'au moins une première suspension de roue comporte un ressort (3) exécuté comme un ressort hélicoïdal (2), attribué à la roue concernée, sachant en plus qu'un dispositif de réglage de la hauteur hydraulique est attribué à la première suspension de roue avec un système cylindre-piston (20) comprenant un espace de travail hydraulique (18) agissant sur un point de base (4) du ressort hélicoïdal (2), lequel peut être sollicité par un groupe hydraulique (21) décentralisé attribué à la roue concernée , comprenant un réservoir d'alimentation (19) pour le liquide hydraulique et une pompe hydraulique (25) entraînée par un moteur électrique (22), sachant qu'au moins le moteur électrique (22) du groupe hydraulique (21) est disposé à l'intérieur du ressort hélicoïdal (2),
**caractérisé par** les caractéristiques suivantes :
la première suspension de roue comporte un amortisseur disposé en dehors du ressort, attribué à la roue concernée,
l'espace de travail hydraulique (18) du système cylindre-piston hydraulique (20) est de forme annulaire et entoure le moteur électrique (22) du groupe hydraulique (21) et/ou la pompe hydraulique (25) de celui-ci,
le réservoir d'alimentation de liquide hydraulique (19) est exécuté de forme annulaire, entoure le moteur électrique (22) du groupe hydraulique (21) et/ou la pompe hydraulique (25) de celui-ci et comporte un volume modifiable en sens opposé au volume de l'espace de travail hydraulique (18) du système cylindre-piston (20).

2. Châssis de véhicule automobile selon la revendication 1, **caractérisé en ce qu'**également la pompe hydraulique (25) du groupe hydraulique (21) est disposée à l'intérieur du ressort hélicoïdal (2).

3. Châssis de véhicule automobile selon la revendication 1 ou la revendication 2, **caractérisé en ce qu'**également le réservoir d'alimentation de liquide hydraulique (19) est disposé à l'intérieur du ressort hélicoïdal (2).

4. Châssis de véhicule automobile selon l'une quelconque des revendications 1 à 3, **caractérisé en ce que** le dispositif de réglage de la hauteur hydraulique comprend un module de réglage électro-hydraulique (5) complexe, comprenant le groupe hydraulique (21) et le système cylindre-piston attribué (20).

5. Châssis de véhicule automobile selon la revendication 4, **caractérisé en ce que** le module de réglage électro-hydraulique (5) comprend un adaptateur (6) dans lequel le système cylindre-piston (20) est intégré de telle sorte qu'entre la pompe hydraulique (25) et le système cylindre-piston (20) il n'existe aucune conduite hydraulique dégagée.

6. Châssis de véhicule automobile selon la revendication 5, **caractérisé en ce que** dans l'adaptateur (6) est intégré un carter de pompe de la pompe hydraulique attribuée (25) de telle sorte qu'un rotor de pompe (26) tourne dans un espace creux (27) exécuté dans l'adaptateur (6).

7. Châssis de véhicule automobile selon la revendication 5 ou la revendication 6, **caractérisé en ce que** l'adaptateur (6) comprend un corps de base (7) et une section d'actionnement (8) guidée pouvant être déplacée sur celui-ci, comportant une butée de ressort (9) .

8. Châssis de véhicule automobile selon la revendication 7, **caractérisé en ce que** le corps de base (7) comprend une section de carter (11) et un noyau d'adaptateur (12) logé dedans.

9. Châssis de véhicule automobile selon la revendication 8, **caractérisé en ce que** des conduits de fluide hydrauliques (30) sont exécutés dans la surface de séparation entre le noyau d'adaptateur (12) et la section de carter (11).

10. Châssis de véhicule automobile selon l'une quelconque des revendications 7 à 9, **caractérisé en ce que** le système cylindre-piston (20) comprend un espace de travail (18) de forme annulaire exécuté entre le corps de base (7) et la section d'actionnement (8).

11. Châssis de véhicule automobile selon l'une quelconque des revendications 5 à 10, **caractérisé en ce que** le réservoir d'alimentation de liquide hydraulique (19) est intégré dans l'adaptateur (6).

12. Châssis de véhicule automobile selon l'une quelconque des revendications 5 à 11, **caractérisé en ce que** le corps de base (7) de l'adaptateur (6) est relié à la structure de base (1) du châssis de véhicule automobile.

13. Châssis de véhicule automobile selon l'une quelconque des revendications 1 à 12, **caractérisé en ce que** le groupe hydraulique (21) est entouré au moins en partie par un tube de protection (33).

14. Châssis de véhicule automobile selon la revendication 13, **caractérisé en ce que** le tube de protection (33) peut être mobile par rapport au groupe hydraulique (21) .
